# EUROPEAN PATENT APPLICATION

(11) **EP 4 825 543 A1**
(43) Date of publication of application: **21.10.2026**
(21) Application number: 26172914.9
(22) Date of filing: 16.04.2026
(51) Int. Cl.: B25J 9/16, G05B 19/418

(54) **METHOD FOR THE ACCURATE PLACEMENT OF A PIECE OF RAW MATERIAL IN A MACHINE CLAMP OF A MACHINE TOOL**

(30) Priority: 16.04.2025 NL 2040205
(71) Applicant: Kuypers Kunststoftechniek BV, 5527 LC Hapert (NL)
(72) Inventor: KUYPERS, Ron, Hapert (NL)
(74) Representative: Verhees, Godefridus Josephus Maria

(57) **Abstract**

Several pieces of starting material 1 are placed at mutual distances on the bottom of a drawer. Subsequently, the position and orientation of the pieces of starting material 1 on the bottom of the drawer are determined by moving a scanner over the drawer. Next, using a gripper 19 of a robot 15, a desired piece of starting material 1 is picked up from the bottom of the holder and brought over a sensor 21. The piece of starting material 1 is moved over the sensor 21, whereby the position of the piece of starting material 1 in the gripper 19 is accurately determined. Subsequently, the piece of starting material 1 is accurately positioned and clamped between spaced-apart clamping jaws of a machine tool clamp, after which the machining can begin without first having to determine the position of the piece of starting material in the machine clamp.

## Description

### Technical field of the invention

The invention relates to method for accurately placing a piece of starting material in a machine clamp of a machine tool, comprising:
- placing various pieces of starting material at locations in a top-open holder,
- determining the positions of the pieces of starting material in the holder,
- picking up a desired piece of starting material from the bottom of the holder using a gripper of a robot based on the previously determined positions of the pieces of starting material, and
- placing the piece of starting material between spaced clamp jaws of the machine clamp of the machine tool.

For the accurate machining of a piece of starting material by a machine tool, such as a CNC machine, it is necessary that the position of the piece of starting material in the machine clamp is accurately known.

### Background of the invention

A method for placing a piece of starting material in a machine clamp of a machine tool, as referred to in the preamble of claim 1, is known from CN106041930A. In this known method, pieces of starting material are placed at known locations in the holder and the presence of pieces of starting material at the predefined locations is recorded by means of a camera. Furthermore, after the piece of starting material has been clamped in the machine clamp and before the machining process can be carried out, the distance of the piece of starting material from the machine clamp is determined.

### Summary of the invention

An object of the invention is to provide a method of the kind mentioned in the opening whereby pieces of starting material can be placed more efficiently and accurately in a machine clamp of a machine tool. To this end, the method according to the invention is characterized in that it comprises the following steps:
- the pieces of starting material are placed at arbitrary locations, in arbitrary orientations and at arbitrary distances from each other on the bottom of the holder,
- in addition to determining the positions of the pieces of starting material on the bottom of the holder, the orientations of the pieces of starting material on the bottom of the holder are also determined,
- the picking up of a desired piece of starting material from the bottom of the holder by means of the robot's gripper is performed not only on the basis of the previously determined positions of the pieces of starting material but also on the basis of the previously determined orientations of the pieces of starting material, and
- the position of the piece of starting material in the robot's gripper is determined.

The advantage of this method is that the pieces of starting material can be placed arbitrarily in a holder. It only needs to be ensured that the pieces of starting material are spaced apart from each other so that they can be grasped individually by a gripper. Furthermore, the position of the piece of starting material -that has been removed from the holder- within the clamp does not need to be determined; instead, the gripper can place the piece of starting material directly at an accurate position within the clamp because the position of the piece of starting material within the gripper is determined and the gripper's position relative to the clamp is continuously known. After accurately placing the piece of starting material in the clamp, the starting material can be clamped by moving the clamping jaws towards each other, and the machining process can be started.

Because the position of the piece of starting material within the gripper has been accurately determined, the robot can position the piece of starting material precisely between the clamping jaws. To achieve this, the clamping jaws only need to be positioned slightly further apart than the dimensions of the piece of starting material. Consequently, the position of the piece of starting material within the clamp is accurately known after clamping, and the position of the piece of starting material within the clamp does not need to be determined before machining begins.

An embodiment of the method according to the invention is characterized in that the position of the piece of starting material in the robot gripper is determined by moving the piece of starting material present in the gripper by the gripper over a sensor, whereby the positions of the edges of the piece of starting material relative to the gripper are accurately determined by means of the sensor. This is a contactless and therefore fast method for determining the position of the piece of starting material in the gripper.

Preferably, a confocal sensor is used to determine the edges of the piece of starting material relative to the gripper. With a confocal sensor, the edges can be determined of any possible piece of starting material can be determined regardless of the material type, color, degree of transparency, etc. of the piece of starting material. Such a confocal chromatic sensor can measure small distances according to the principle of chromatic aberration. The sensor measures fine structures by projecting a very small dot onto the target. This is explained in more detail below in the detailed description of the figures.

### Brief description of the drawings

The invention will be further elucidated below on the basis of drawings. These drawings show an embodiment of the method. according to the present invention. In the drawings:
Figure 1 shows a drawer containing pieces of starting material during scanning;
Figure 2 shows the robot removing a piece of starting material from the drawer;
Figure 3 shows the robot with the piece of starting material as it moves past the sensor; and
Figure 4 shows the robot placing the piece of starting material in the machine clamp.

### Detailed description of the drawings

For the precise machining of a piece of starting material by a machine tool, such as a CNC machine, it is necessary that the position of the piece of starting material in the clamp is accurately known. This can be achieved by accurately determining the position of the piece of starting material in the clamp after placing it. A method is described below that ensures, in a more efficient manner, that the position of the piece of starting material in the clamp is accurately known for the purpose of controlling the machine tool.

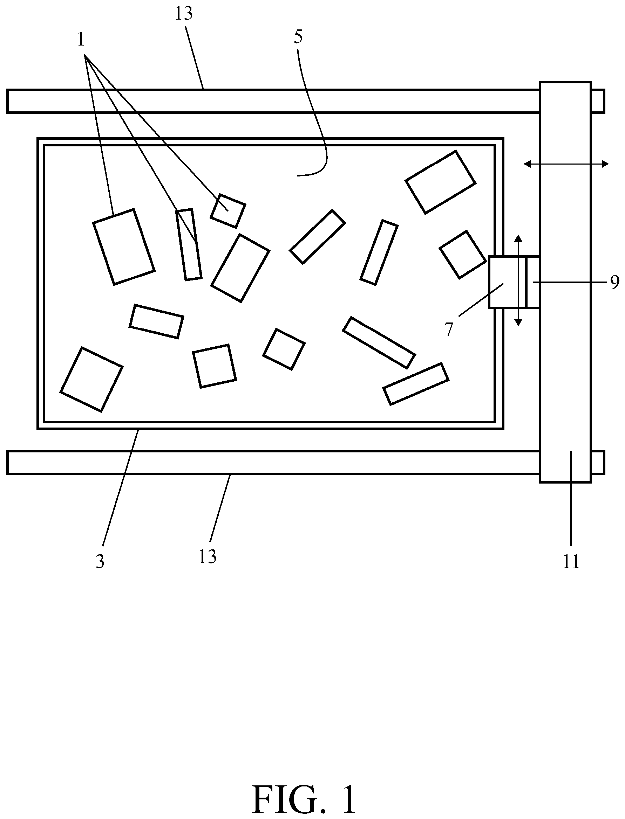

First, the available pieces of starting material 1 are distributed randomly on the bottom 5 of a holder 3, executed in this configuration as a drawer, with the pieces of starting material 1 positioned at a distance from each other, see Figure 1. Subsequently, the position and orientation of the pieces of starting material 1 are determined by a scanner 7. To this end, scanner 7 is mounted on a carriage 9 that is movable along a guide 11, which in turn is movable along guides 13 located on either side of drawer 3.

Scanner 7 is coupled to an image recognition unit (not shown) that transmits information about the position of the pieces of starting material to a control unit (also not shown) which is coupled to a robot and which directs the robot to pick up the desired piece of starting material from the drawer.

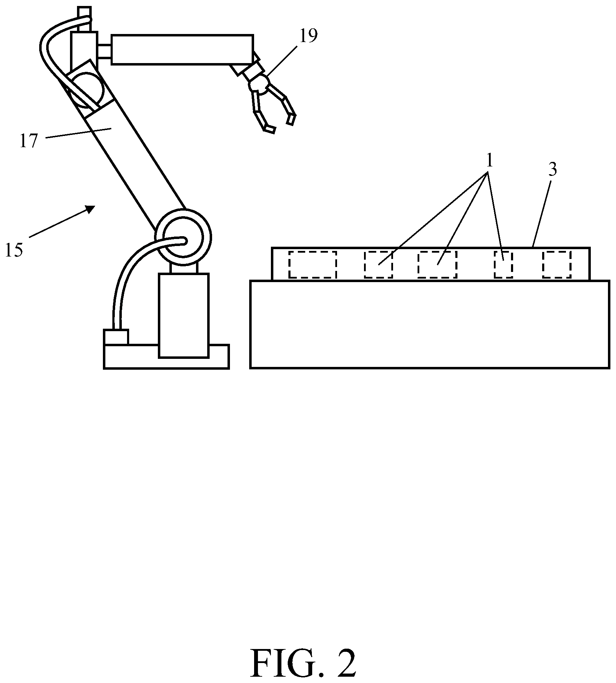

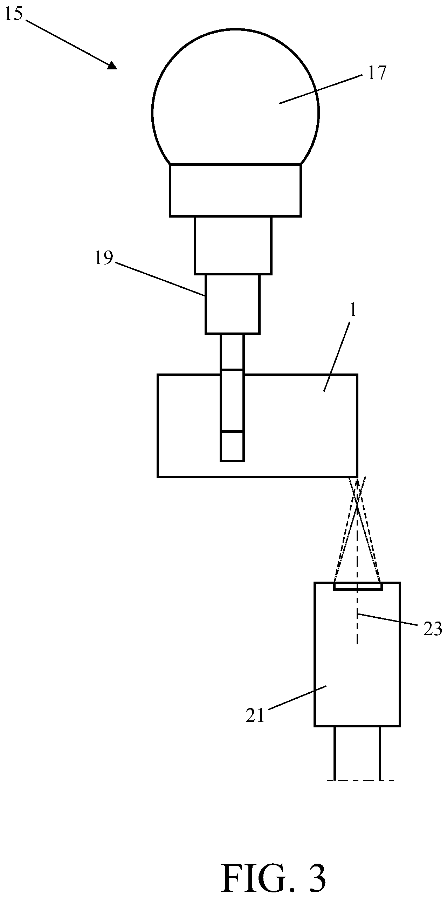

Figure 2 shows the robot 15 and the drawer 3 with pieces of starting material 1. The robot 15 is equipped with a robot arm 17 with a gripper 19 at the free end for grasping a piece of starting material. After the robot 15 has picked up the desired piece of starting material 1 from the bottom of drawer 3 with the gripper 19, the robot 15 positions the piece of starting material 1 above a sensor 21, see Figure 3. Subsequently, the robot 15 moves the piece of starting material 1 horizontally relative to the sensor 21, while the sensor 21 detects the edges of the piece of starting material 1. The data from the sensor 21 are processed together with the known position of the gripper 19 to determine the position of the piece of starting material 1 relative to the gripper 19.

The sensor 21 consists of a confocal measuring instrument. A confocal (chromatic) measuring instrument is known and is used to determine the image error, i.e., chromatic aberration (also longitudinal color deviation), of glass lenses for optical distance measurements. In this process, a white light beam is directed by a light source through a special lens arrangement. The sensor exhibits a particularly strong longitudinal color aberration. In this case, the light source does not focus the white light onto a single white focal point, but onto a rainbow-colored line 23 along the lens axis; see Figure 3, which illustrates the determination of the edges of the starting material. Close to the lens is the blue focal point, while further away are the green, yellow, red, etc. focal points.

When light strikes an object and is reflected, the color of the reflected light can be attributed to the distance between the object and the sensor, known as color-coded distance measurements. The reflected light is sent back along the same path to the controller, where an optoelectric device (spectrometer) analyzes its color. Here, the light is spectrally amplified and displayed on a line receiver, just like a prism. The relationship between a color and the distance between the measuring object and the lens is configured for each sensor in the controller. This distance is then output as a measured value.

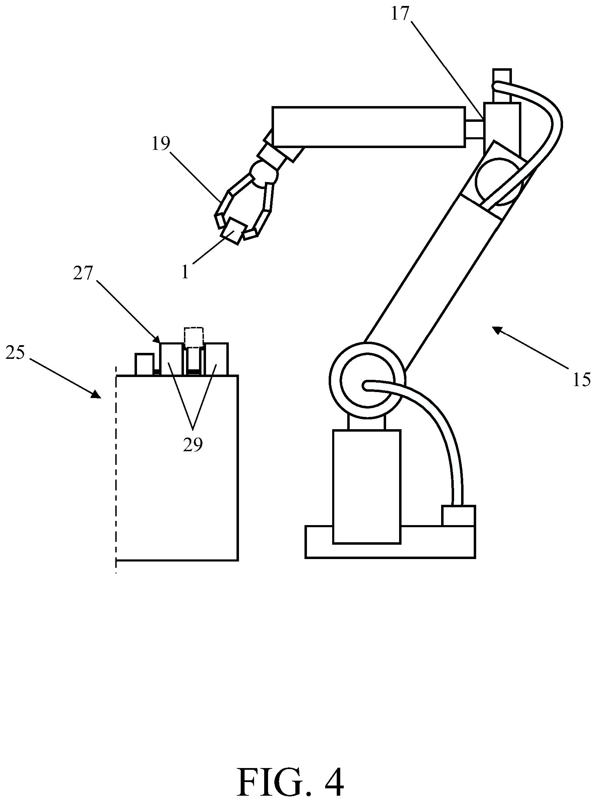

Next, robot 15 moves the piece of starting material 1 to a clamp 27 of a machine tool 25, see figure 4. The clamp 27 has two clamping jaws 29 that are positioned at a distance from one another. This distance is only slightly greater than the dimensions of the piece of starting material 1, so that for clamping the piece of starting material placed in the machine clamp, the clamping jaws 29 need to be moved towards each other over the shortest possible distance. The position of the piece of starting material in the machine clamp 27 is indicated by dashed lines. After this, the operation can be started. The ability to accurately position a piece of starting material in a machine clamp is necessary to be able to carry out the machining process fully automatically.

Although the present invention is elucidated above on the basis of the given drawings, it should be noted that this invention is not limited whatsoever to the embodiment shown in the drawings. The invention also extends to all embodiments deviating from the embodiment shown in the drawings within the scope of the invention defined by the appended claims.

## Claims

1. Method for accurately placing a piece of starting material (1) in a machine clamp (27) of a machine tool (25), comprising:
- placing various pieces of starting material (1) at locations in a top-open holder (3),
- determining the positions of the pieces of starting material (1) in the holder (3),
- picking up a desired piece of starting material (1) from the bottom (5) of the holder (3) using a gripper (19) of a robot (15) based on the previously determined positions of the pieces of starting material (1), and
- placing the piece of starting material (1) between spaced clamp jaws (29) of the machine clamp (27) of the machine tool (25),
**characterized in that**:
- the pieces of starting material (1) are placed at random locations, in random orientations and at random distances from each other on the bottom (5) of the holder (3),
- in addition to determining the positions of the pieces of starting material (1) on the bottom (5) of the holder (3) the orientations of the pieces of starting material (1) on the bottom (5) of the holder (3) are also determined,
- the picking up of a desired piece of starting material (1) from the bottom (5) of the holder (3) by means of the gripper (19) of the robot (15) is done not only on the basis of the previously determined positions of the pieces of starting material (1) but also on the basis of the previously determined orientations of the pieces of starting material (1), and
- the position of the piece of starting material (1) in the gripper (19) of the robot (15) is determined.

2. Method according to claim 1, **characterized in that** the position of the piece of starting material (1) in the gripper (19) of the robot (15) is determined by moving the piece of starting material (1) present in the gripper (19) over a sensor (21), whereby the positions of the edges of the piece of starting material (1) relative to the gripper (19) are determined with the aid of the sensor (21).

3. Method according to claim 2, **characterized in that** a confocal sensor (21) is used as sensor (21).
